# EUROPÄISCHE PATENTSCHRIFT

(11) **EP 2 500 103 B1**
(45) Veröffentlichungstag und Bekanntmachung des Hinweises auf die Patenterteilung: **24.09.2014**
(21) Anmeldenummer: 11002079.9
(22) Anmeldetag: 14.03.2011
(51) Int. Cl.: B05B 1/16, B05B 1/18, B05B 15/00, E03C 1/04, B05B 12/00, B05B 15/02

(54) **Umstellhandbrause**
Adjustable hand shower
Mitigeur de manoeuvre

(43) Veröffentlichungstag der Anmeldung: 19.09.2012
(73) Patentinhaber: KWC AG, 5726 Unterkulm (CH)
(72) Erfinder: Kull, Thomas, CH-5102 Rupperswil (CH)
(74) Vertreter: Schaad, Balass, Menzl & Partner AG

(56) Entgegenhaltungen:
- EP-A2- 1 418 007
- DE-A1-102005 059 999
- DE-U1- 9 314 443
- DE-U1- 20 108 057
- US-B1- 7 344 095

## Beschreibung

Die vorliegende Erfindung betrifft eine Handbrause gemäss Patentanspruch 1.

Handbrausen, die im innern eines Aussengehäuses eine Umschalteinrichtung aufweisen, sind allgemein bekannt. Bei solchen herkömmlichen Handbrausen weist das Aussengehäuse bei der Umschalteinrichtung eine Öffnung auf, in welche zum Abdichten gegen die Umgebung hin ein als separates Teil hergestelltes, gummielastisches Membranelement eingesetzt ist. Durch Verformen des Membranelements kann die Umschalteinrichtung von der Umgebung her betätigt werden.

Dokument DE 93 14 443 U1 offenbart einen Wasserauslauf für eine Sanitärarmatur, mit wenigstens einem Brauseauslass und einem Strahlauslass, mit einem Umstellventil sowie einer Handbetätigung mit einer in einem Gehäuse angeordneten elastischen Abdeckhaube. Die Handbetätigung weist einen Kipphebel auf, der mit einem Hebelarm mit einem Ventilkolben des Umstellventils verbunden ist und der mit einem anderen Hebelarm mit einem Schieber zusammenarbeitet. Dieser Kipphebel kann unterhalb der Abdeckhaube so angeordnet sein, dass er unmittelbar von der Abdeckhaube am einen und am anderen Hebelarm beaufschlagbar ist.

Es ist eine Aufgabe der vorliegenden Erfindung, eine Handbrause mit einer Umschalteinrichtung zur Verfügung zu stellen, welche einfach herstellbar ist und eine zuverlässige Abdichtung gewährleistet.

Diese Aufgabe wird mit einer Handbrause gelöst, welche die Merkmale des Anspruchs 1 aufweist.

Die erfindungsgemässe Handbrause weist ein einen Innenraum begrenzendes Aussengehäuse auf, welches einen Griffbereich und einen Kopfbereich definiert. Das Aussengehäuse weist einen ersten Gehäuseteil sowie einen zweiten Gehäuseteil auf und im Innenraum ist eine Umschalteinrichtung angeordnet. Wie allgemein bekannt, weist die Handbrause weiter einen, üblicherweise beim freien Ende des Griffteils angeordneten Wasserzuleitungsanschluss und im Bereich des Kopfbereichs Wasserstrahlaustrittsöffnungen auf, welche mit dem Wasserzuleitungsanschluss strömungsverbunden sind.

Erfindungsgemäss ist mindestens der erste Gehäuseteil im Zwei- oder Mehrkomponentenspritzgussverfahren hergestellt. Er weist einen formbeständigen Tragteil aus einer Hartkomponente und bei der Umschalteinrichtung einen vom Innenraum zur vom Innenraum abgewandten Aussenseite des Tragteils verlaufenden Durchlass auf. Dieser Durchlass ist membranartig von einer im Mehrkomponentenspritzgussverfahren an den Tragteil angespritzten Weichkomponente gegen die Umgebung hin verschlossen. Die gummielastischen Eigenschaften der Weichkomponente erlauben die Betätigung der Umschalteinrichtung von der Umgebung her durch Verformung der Weichkomponente im Bereich des Durchlasses.

Besonders bevorzugt werden als Hartkomponente und Weichkomponente affine Materialien verwendet, welche im Spritzgussverfahren eine Materialverbindung miteinander eingehen.

Bevorzugt erstreckt sich der erste Gehäuseteil über den - gesamten - Griffbereich und den - gesamten - Kopfbereich und befindet sich der Durchlass und somit die Umschalteinrichtung im Griffbereich. Diese ermöglicht einerseits ein einhändiges Bedienen der Handbrause und andererseits die Ausbildung der Handbrause als Flächenbrause. Bei Flächenbrausen weist insbesondere der Kopfteil eine geringe Dicke auf.

In einer weiteren besonders bevorzugten Ausführungsform ist der Tragteil schalenartig ausgebildet, wobei er einen Bodenteil und einen umfangsseitig vom Bodenteil abstehenden Mantelteil bildet. Der zweite Gehäuseteil bildet dabei vorzugsweise einen Deckel, welcher insbesondere mit dem freien Rand des Mantelteils, vorzugsweise dichtend fest verbunden ist.

Auch der zweite Gehäuseteil ist vorzugsweise als Spritzgussteil hergestellt. Er kann im Einkomponentenspritzgussverfahren hergestellt sein, es ist jedoch auch möglich, ihn im Zwei- oder Mehrkomponentenspritzgussverfahren herzustellen. Vorzugsweise ist er formstabil ausgebildet und er kann eine Oberflächenbehandlung, beispielsweise eine Metallisierung, aufweisen.

Die Verbindung zwischen dem ersten Gehäuseteil und dem zweiten Gehäuseteil erfolgt auf allgemein bekannte Art und Weise, beispielsweise mittels einer Klebverbindung, durch Überspritzen, durch Schnappverbindungen usw., oder Kombinationen davon.

Im Kopfbereich kann der Bodenteil des ersten Gehäuseteils die Wasserstrahlaustrittsöffnungen aufweisen. Diese können beispielsweise an durch die Weichkomponente gebildeten Noppen ausgebildet sein. Dadurch können Kalkablagerungen verhindert werden und insbesondere durch die Möglichkeit der elastischen Verformung der Noppen können allfällige Kalkablagerungen gelöst werden.

Besonders bevorzugt weist jedoch im Kopfbereich der Bodenteil Wasserauslassdurchlässe auf, welche von Wasserauslassfortsätzen eines im Innenraum angeordneten Bauteils durchgriffen sind. In diesem Fall ist das Aussengehäuse selber nicht wasserführend.

Bevorzugt überdeckt die Weichkomponente den Durchlass vollständig und die Aussenseite des Tragteils mindestens um den Durchlass herum. Dabei kann ein grossflächiger Verbindungsbereich der Weichkomponente mit der Hartkomponente beim Spritzgiessen geschaffen werden.

Besonders bevorzugt überdeckt die Weichkomponente mindestens annähernd die gesamte Aussenseite des Tragteils. Besonders bevorzugt überdeckt die Weichkomponente ununterbrochen die gesamte Aussenseite des Tragteils, welche sonst gegen die Umgebung hin frei liegen würde.

Bei der Umschalteinrichtung kann es sich beispielsweise um eine elektrische Schalteinrichtung handeln, um eine in die Handbrause eingebaute Lichtquelle umzuschalten.

Die Umschalteinrichtung kann jedoch auch ein Umschaltventil aufweisen, um unterschiedliche Wasserstrahlbilder und Wasserstrahleigenschaften zu erzeugen.

Die Umschalteinrichtung weist vorzugsweise ein Ventilgehäuse auf, welches mit einer Einlassöffnung versehen ist, die mit dem Wasserzuleitungsanschluss strömungsverbunden ist. Weiter weist das Ventilgehäuse mit den Wasserstrahlaustrittsöffnungen verbundene Auslassöffnungen auf. Im Innern des Ventilgehäuses ist ein über die membranartig ausgebildete Weichkomponente von der Umgebung her betätigbares Ventilglied angeordnet.

Bevorzugt ist die Einlassöffnung permanent mit einer ersten der Auslassöffnungen verbunden. Die zweite der Auslassöffnungen ist mit der Einlassöffnung bevorzugt nur dann verbunden, wenn sich das Ventilglied in Offenstellung befindet. Dies ermöglicht beispielsweise zwei unterschiedliche Wasserdurchflüsse einzustellen. Sind jedoch die beiden Auslassöffnungen mit unterschiedlichen Wasserstrahlaustrittsöffnungen verbunden, besteht die Möglichkeit, entweder nur die mit der ersten Auslassöffnung verbundenen Wasserstrahlaustrittsöffnungen oder zusätzlich auch die mit der zweiten Auslassöffnung verbundenen Wasserstrahlaustrittsöffnungen mit Wasser zu beschicken.

Bei einer bevorzugten Ausbildungsform ist am Ventilgehäuse ein Betätigungshebel gelagert, welcher mit dem Ventilglied zu dessen Umstellung verbunden ist. Bevorzugt ist der Betätigungshebel als Betätigungswippe ausgebildet. Zum Umschalten der Umschalteinrichtung wird von der Umgebung her die Weichkomponente im Bereich des Durchlasses verformt und dabei auf den Betätigungshebel eingewirkt.

Bei einer besonders bevorzugten Ausbildungsform ist im Kopfbereich im Innenraum ein Innengehäuse angeordnet. Dieses ist mit der Umschalteinrichtung, insbesondere mit dessen Auslassöffnungen verbunden. Bevorzugt besteht das Innengehäuse aus einem Auslassteil und einem damit fest und dichtend verbundenen Deckelteil. Das Auslassteil weist dabei Wasserauslassfortsätze, an deren freien Enden die Wasserstrahlaustrittsöffnungen ausgebildet sind, auf. Diese Wasserauslassfortsätze durchgreifen die Wasserauslassdurchlässe des Bodenteils.

Das Deckelteil und das Auslassteil sind formbeständig ausgebildet und weisen dazu bevorzugt eine Hartkomponente auf. Es ist dabei möglich, sowohl das Deckelteil als auch das Auslassteil aus einer Hartkomponente herzustellen und im Zweikomponentenspritzgussverfahren die Wasserauslassfortsätze aus einer Weichkomponente an die Hartkomponente des Auslassteils anzuspritzen.

In einer besonders bevorzugten Ausführungsform weist jedoch das Auslassteil einen, insbesondere im Spritzgussverfahren - insbesondere aus einer Hartkomponente - hergestellten Auslassschalenteil auf, in welchen ein Einsatzteil aus einem gummielastischen Material eingesetzt ist. In diesem Fall sind die Wasserauslassfortsätze, welche die Wasserauslassdurchlässe des Bodenteils durchgreifen, durch das Einsatzteil gebildet. Da das Einsatzteil aus gummielastischem Material gefertigt ist, kann es weiter Dichtfunktionen übernehmen, so beispielsweise zum Abdichten des Innengehäuses gegenüber dem Innenraum des Aussengehäuses hin. Bevorzugt überdeckt das Einsatzteil die Innenseite des Auslassteils vollständig.

Bei der letztgenannten Ausführungsform ist bevorzugt das Deckelteil mit dem Auslassschalenteil fest verbunden, beispielsweise mittels Schnappverbindungen. Selbstverständlich sind auch andere Befestigungsmöglichkeiten, wie Schraubverbindungen oder Kombinationen von Befestigungsmöglichkeiten denkbar.

Bevorzugt bildet das Innengehäuse eine erste Kammer, welche nur mit der ersten Auslassöffnung des Ventilgehäuses, und eine zweite Kammer, welche nur mit der zweiten Auslassöffnung des Ventilgehäuses verbunden ist. Diese Kammern speisen die ihnen zugeordneten Wasserstrahlaustrittsöffnungen.

In einer besonders bevorzugten Ausführungsform befindet sich die erste Kammer mittig des Kopfbereichs und sie hat vorzugsweise einen kreisringförmigen Querschnitt. Die zweite Kammer erstreckt sich bevorzugt ringartig um die erste Kammer herum.

Wird nur die erste Kammer mit Wasser beschickt, ergibt sich ein entsprechendes Strahlbild mit gegebenenfalls intensiveren Strahlen als wenn beide Kammern mit Wasser beschickt werden.

Weist das Auslassteil einen Einsatzteil aus gummielastischem Material auf, kann dieses auf besonders einfache Art und Weise der Abdichtung der beiden Kammern gegeneinander dienen, indem der Deckelteil eine Trennwand bildet, welche mit ihrem freien Rand am Einsatzteil anliegt.

Als Hartkomponente für den Tragteil eignet sich insbesondere ein PBT, welches bevorzugt mit Glasfasern verstärkt ist, beispielsweise um 20%. Bei der Weichkomponente kann es sich beispielsweise um eine Silikonschicht - LSR - handeln. Die wasserführenden Teile können beispielsweise aus POM gefertigt sein und als Material für den zweiten Gehäuseteil kann beispielsweise ABS verwendet werden. Selbstverständlich sind andere Materialwahlen möglich.

Die vorliegende Erfindung wird anhand eines in der Zeichnung dargestellten Ausführungsbeispiels näher erläutert. Es zeigen rein schematisch:
- Fig. 1: in Untersicht eine Ausführungsform einer erfindungsgemässen Handbrause, welche als Flächenbrause ausgebildet ist;
- Fig. 2: einen Längsschnitt durch die Handbrause gemäss Fig. 1 entlang der Linie II - II;
- Fig. 3: in Draufsicht - Sicht auf die Innenseite - eines im Zweikomponentenspritzgussverfahren hergestellten ersten Gehäuseteils der Handbrause;
- Fig. 4: in einem Schnitt entlang der Linie IV - IV der Fig. 3 den ersten Gehäuseteil;
- Fig. 5: in Draufsicht ein Ventilgehäuse einer Umschalteinrichtung der Handbrause;
- Fig. 6: in einem Schnitt entlang der Linie VI - VI der Fig. 5 das dort gezeigte Ventilgehäuse;
- Fig. 7: in einem Schnitt entlang der Linie VII - VII der Fig. 6 das in den Fig. 5 und 6 gezeigte Ventilgehäuse;
- Fig. 8: in Draufsicht ein Deckelteil eines Innengehäuses;
- Fig. 9: in Untersicht das in der Fig. 8 gezeigte Deckelteil;
- Fig. 10: in einem Schnitt entlang der Linie X - X der Fig. 8 das in den Fig. 8 und 9 gezeigte Deckelteil;
- Fig. 11: in Draufsicht ein Auslassschalenteil des Innengehäuses; und
- Fig. 12: in einem Schnitt entlang der Linie XII - XII der Fig. 11 das Auslassschalenteil.

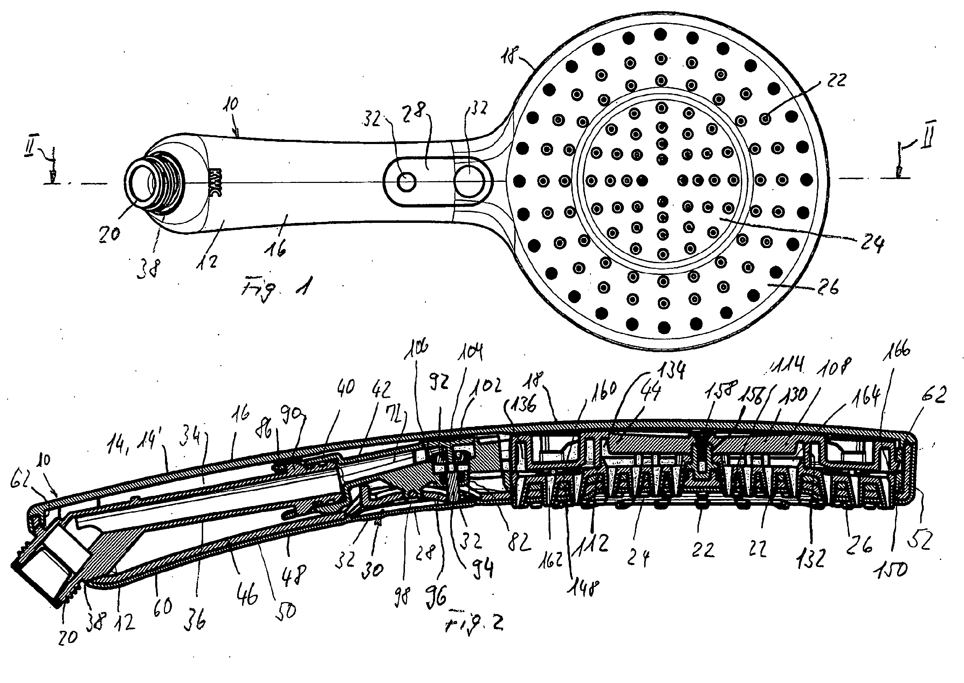

Fig. 1 zeigt eine erfindungsgemässe Handbrause in Untersicht. Sie weist ein Aussengehäuse 10 auf, von welchem in Fig. 1 nur ein erster Gehäuseteil 12 sichtbar ist. Ein einen Deckel 14' bildender zweiter Gehäuseteil 14 ist in Fig. 2 gezeigt.

Das im vorliegenden Fall aus dem ersten Gehäuseteil 12 und dem zweiten Gehäuseteil 14 bestehende Aussengehäuse 10 definiert einen Griffbereich 16 und einen Kopfbereich 18 der Handbrause. Sie weist beim freien Ende des Griffbereichs 16 einen Wasserzuleitungsanschluss 20 auf, an welchem in bekannter Art und Weise ein Brauseschlauch anschliessbar ist. An der dem Wasserzuleitungsanschluss 20 abgewandten Ende des Griffbereichs 16 schliesst an diesem der Kopfbereich 18 an. Im Bereich des Kopfbereichs 18 sind Wasserstrahlaustrittsöffnungen 22 vorhanden, durch welche das durch den Wasserzuleitungsanschluss zur Handbrause gelangende Wasser unter Bildung von Wasserstrahlen austritt.

Im gezeigten Ausführungsbeispiel ist die Handbrause als Flächenbrause ausgebildet; die Dicke des Kopfbereichs 18 ist dabei im Wesentlichen gleich wie die Dicke des Griffbereichs 16 - vergleiche Fig. 2-, wobei in Untersicht beziehungsweise Draufsicht gesehen, der Kopfbereich 18 eine grössere Ausdehnung hat als der Griffbereich 16 und im vorliegenden Fall kreisförmig ausgebildet ist.

Die Handbrause weist im Kopfbereich ein zentrales erstes Feld 24 mit diesem zugeordneten Wasserstrahlaustrittsöffnungen 22 und, um dieses herum, ein ringförmiges zweites Feld mit diesem zugeordneten Wasserstrahlaustrittsöffnungen 22 auf.

Weiter ist ein Membranbereich 28 einer Weichkomponente dargestellt, welcher sich im kopfbereichseitigen Endbereich des Griffbereichs 16 befindet. Der Membranbereich 28 dient der Betätigung einer Umschalteinrichtung 30 von der Umgebung her durch Verformen des Membranbereichs 28 mittels eines Fingers des Benutzers der Handbrause. Die beiden kreisförmigen Bereiche 32 im Membranbereich 28 stellen eine örtliche Verdickung des Membranbereichs 28 dar, um dem Benutzer anzuzeigen, wo er zum Betätigen der Umschalteinrichtung 30 drücken muss.

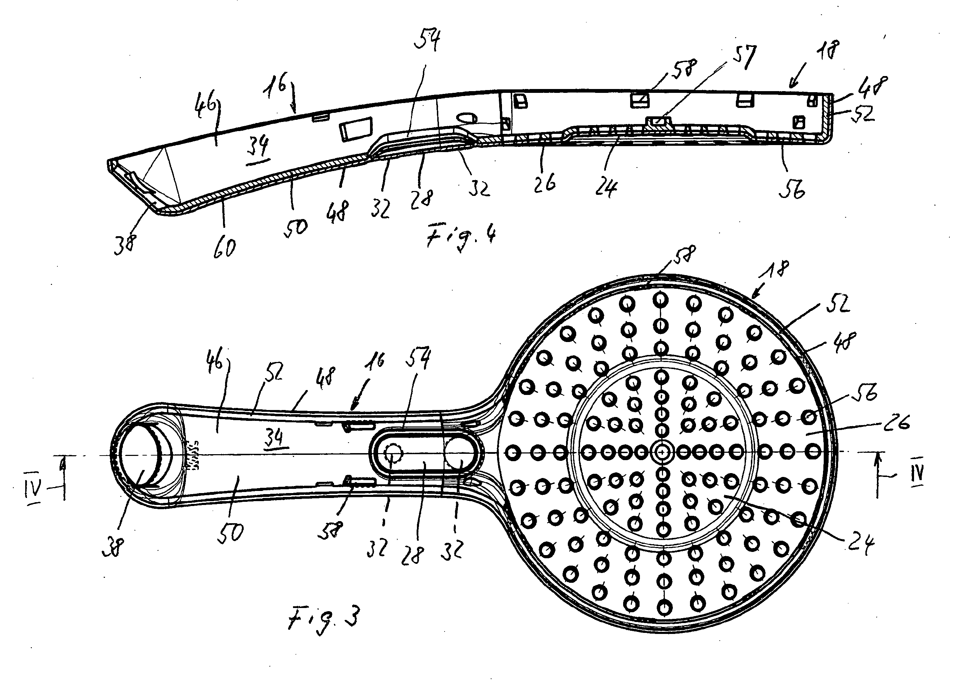

Die aneinander dichtend befestigten beiden Gehäuseteile 12, 14 umschliessen beziehungsweise begrenzen einen Innenraum 34 des Aussengehäuses 10, in welchem die Umschalteinrichtung 30 angeordnet ist. Weiter befindet sich im Innenraum im Griffbereich 16 ein Zuleitungsrohrteil 36, welches einerseits den ersten Gehäuseteil 12 durch eine entsprechende Zuleitungsöffnung 38 - siehe auch Fig. 3 und 4 - dichtend durchdringt und an dem der über das Aussengehäuse 10 vorstehende Wasserzuleitungsanschluss 20 angeformt ist und andererseits in eine hülsenförmig ausgebildete Einlassöffnung 40 eines Ventilgehäuses 42 der Umschalteinrichtung 30 dichtend eingreift.

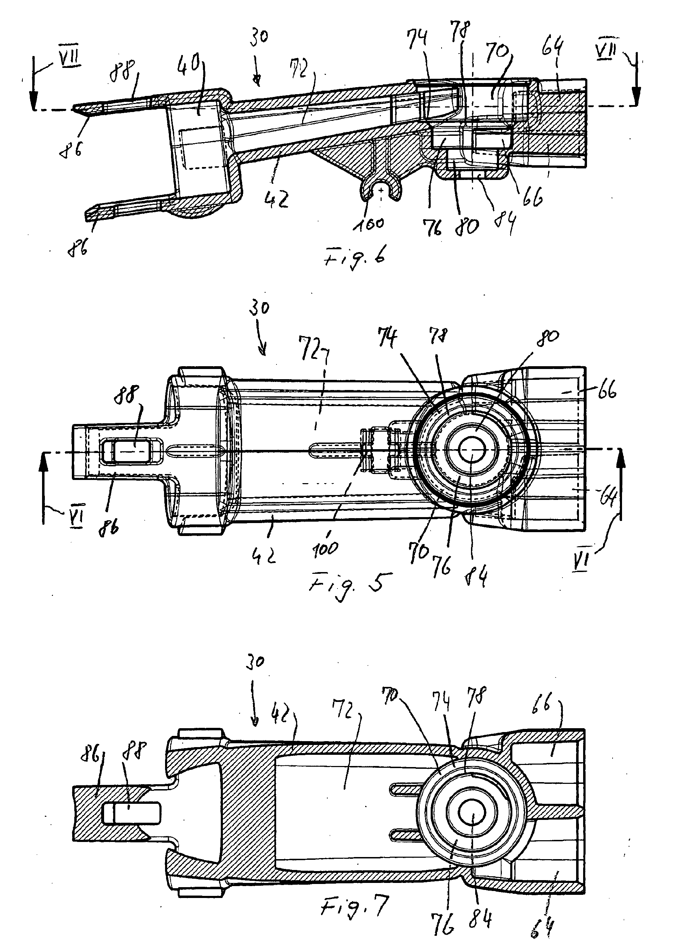

Weiter befindet sich im Innenraum 34 - wie dies insbesondere der Fig. 2 entnehmbar ist - im Kopfbereich 18 ein Innengehäuse 44, welches mit einer ersten Auslassöffnung 46 und einer zweiten Auslassöffnung 48 des Ventilgehäuses 42 strömungsverbunden ist; bezüglich des Ventilgehäuses 42 wird auf die Fig. 5 bis 7 verwiesen.

Wie dies insbesondere den Fig. 3 und 4 entnehmbar ist, ist der erste Gehäuseteil 12 im Zweikomponentenspritzgussverfahren hergestellt. Er besteht aus einem schalenförmigen Tragteil 46, aus einer Hartkomponente, d.h. aus einem harten Kunststoff, und einer überzugartig an der Aussenseite des Tragteils 46 angespritzten Weichkomponente 48.

Der Tragteil 46 bildet einen flächigen, in Längsrichtung der Handbrause, gebogenen Bodenteil 50, von welchem umfangsseitig ein, in Umfangsrichtung in sich geschlossener, Mantelteil 52 absteht. Beim freien Ende des Griffbereichs 16 weist der Mantelteil 52 die Einlassöffnung 40 für den Zuleitungsrohrteil 36 auf.

Weiter weist der Bodenteil 50 des Tragteils 46 einen vom Innenraum 34 zur Aussenseite des Tragteils 46 durchgehenden Durchlass 54 auf, dessen Form dem Membranbereich 28 entspricht.

Im Kopfbereich 18 ist der Tragteil 46 mit durchgehenden Wasserauslassdurchlässen 56 versehen, welche den zugeordneten Wasserstrahlaustrittsöffnungen 20 zugeordnet sind. Das zentrale erste Feld 24 mit dem betreffenden Wasserauslassdurchlässen 56 ist gegenüber dem ringförmigen zweiten Feld 26 in Richtung gegen den Innenraum 34 hin, versetzt angeordnet.

Im Zentrum des ersten Feldes 24 weist der Bodenteil 50 einen in Richtung gegen den Innenraum 34 vorstehenden Zentrierhohlzapfen 57 zum Zentrieren des Innengehäuses 44 auf. Weiter sind am Mantelteil 52, in Richtung gegen den Innenraum 34 vorstehende Vorsprünge 58 angeformt, welche der Positionierung von Einbauten in das Aussengehäuse 10 beziehungsweise der Verbindung (Schnappverbindung) des ersten Gehäuseteils 12 mit dem zweiten Gehäuseteil 14 dienen.

Wie dies insbesondere den Fig. 2 und 4 entnehmbar ist, ist der Tragteil 46 auf seiner gesamten dem Innenraum 34 abgewandten Aussenseite 60 mittels der Weichkomponente 48 überdeckt. Diese Weichkomponente 48 überdeckt auch den Durchlass 54 des Tragteils 46 und bildet dabei den Membranbereich 28. Selbstverständlich überdeckt die Weichkomponente die Einlassöffnung 40 und die Wasserauslassdurchlässe 56 nicht.

Es ist möglich, den ersten Gehäuseteil 12 auch aus drei oder mehr Komponenten im Spritzgussverfahren herzustellen.

Wie dies aus der Fig. 2 hervorgeht, ist der zweite Gehäuseteil 14 flächig und entsprechend dem Bodenteil 50 geschwungen ausgebildet. Auch er erstreckt sich, wie der erste Gehäuseteil 12, über den gesamten Griffbereich 16 und Kopfbereich 18 der Handbrause. Der zweite Gehäuseteil weist in einem Abstand zu seinem Rand, welcher der Dicke des ersten Gehäuseteils 12 bei dessen Rand entspricht, einen lippenartigen, in Richtung gegen den Innenraum 34 vorstehenden, in sich geschlossenen Wulst 62 auf, welcher im montierten Zustand mit dem Mantelteil 52 in Überlappung steht und somit der gegenseitigen Zentrierung der Gehäuseteile 12 und 14 sowie der Abdichtung dient. Weiter kann der Wulst 62 vorstehende Federzungen mit einer Öffnung aufweisen, welche mit nasenartigen Vorsprüngen 58, des Tragteils 46, zur Bildung einer Schnappverbindung, in Eingriff stehen. Zusätzlich oder anstelle einer Schnappverbindung ist es möglich, den ersten Gehäuseteil 12 und den zweiten Gehäuseteil 14 ununterbrochen miteinander zu verkleben oder auf andere Art und Weise miteinander zu verbinden.

Der zweite Gehäuseteil 14 ist bevorzugt aus einer Hartkomponente im Spritzgussverfahren hergestellt. Er kann selbstverständlich auch im Zwei- oder Mehrkomponentenspritzgussverfahren hergestellt sein und/oder mit einer Oberflächenschicht, insbesondere auf der Aussenseite, überzogen sein.

Das Ventilgehäuse 42 der beim Durchlass 54 im Innenraum 34 angeordneten Umschalteinrichtung 30 ist in den Fig. 5 - 7 detailliert dargestellt. Es weist einerseits die hülsenförmig ausgebildete Einlassöffnung 40 und andererseits zwei nebeneinander angeordnete Auslassöffnungen nämlich eine erste Auslassöffnung 64 und eine zweite Auslassöffnung 66 auf. Auf der der Einlassöffnung 40 zugewandten Seite der Auslassöffnungen 64, 66 weist das Ventilgehäuse 42 eine abgestufte, kreisförmige Ventilausnehmung 68 auf. In den oben liegenden Bereich 70 der Ventilausnehmung 68 führt ein von der Einlassöffnung 40 her kommender Leitungsabschnitt 72. Andererseits ist der oben liegende Bereich 70 permanent mit der ersten Auslassöffnung 64 strömungsverbunden.

Eine umlaufende, gebrochene Kante einer Schulter 74 zwischen dem oben liegenden Bereich 70 und einem mittleren Bereich 76 der Ventilausnehmung 68 bildet einen Ventilsitz 78. Dieser mittlere Bereich 76 ist permanent mit der zweiten Auslassöffnung 66 strömungsverbunden. Unterhalb des mittleren Bereichs 76 befindet sich ein im Durchmesser kleinerer untenliegender Bereich 80, welcher dazu bestimmt ist, einen Dichtungsring 82 aufzunehmen, siehe Fig. 2. Die den untenliegenden Bereich 80 abschliessende Wand des Ventilgehäuses 74 weist einen Stösseldurchlass 84 auf.

Das Ventilgehäuse 42 weist weiter zwei einander diametral gegenüberliegende, gegenüber der Einlassöffnung 40 vorstehende Federzungen 86 auf. Diese sind mit einer Rastöffnung 88 versehen, welche dazu bestimmt ist, entsprechende Rastnasen 90, siehe Fig. 2, des Zuleitungsrohrteils 36 zu hintergreifen. Der Vollständigkeit halber sei erwähnt, dass der Zuleitungsrohrteil 36 in seinem diesseitigen Endbereich zwei umlaufende Nuten für die Aufnahme von O-Ringen aufweist, welche dichtend mit der Innenseite der hülsenförmigen Einlassöffnung 40 zusammenwirken.

Wie dies Fig. 2 zeigt, ist in der Ventilausnehmung 68 ein mit dem Ventilsitz 78 zusammenwirkendes Ventilglied 92 angeordnet. Im vorliegenden Fall ist es pilzförmig ausgebildet, wobei der Kopf mit dem Ventilsitz 78 zusammenwirkt und der Stamm 94 als Stössel dichtend und in Längsrichtung verschiebbar den Dichtungsring 82 durchgreift. Befindet sich das Ventilglied 92, durch Anliegen am Ventilsitz 78, in Schliessstellung, ist einzig die erste Auslassöffnung 64 mit dem Leitungsabschnitt 72 und somit dem Wasserzuleitungsanschluss 20 strömungsverbunden. Befindet sich jedoch das Ventilglied 72, durch Abheben ab dem Ventilsitz 78, in Offenstellung, kann vom Wasserzuleitungsanschluss herkommendes Wasser einerseits zur ersten Auslassöffnung 64 und andererseits durch das geöffnete Ventil hindurch zur zweiten Auslassöffnung 66 fliessen.

Das Ventilglied 92 beziehungsweise dessen Stamm 94 ist mit seinem freien Ende an eine Betätigungswippe 76 angelenkt. Diese ist mit ihren Lagerzapfen 98 an einem Zapfenlager 100 des Ventilgehäuses 42 gehalten und schwenkbar gelagert.

In der Fig. 2 ist das Ventil in seiner Schliessstellung gezeigt. Durch Drücken auf den näher beim Kopfbereich 18 liegenden kreisförmigen Bereich 32 des Membranbereichs 28 wird das Ventilglied 92 in seine Offenstellung verschoben und gleichzeitig die Betätigungswippe 96 verschwenkt. Um das Ventilglied 92 wieder in die Schliessstellung zurückzubewegen, wird auf den weiter vom Kopfbereich 18 entfernte kreisförmige Bereich 32 gedrückt, wodurch der Membranbereich 28 verformt und die Wippe entsprechend geschwenkt wird, wodurch das Ventilglied 92 in die Schliessstellung gezogen wird.

Der Vollständigkeit halber sei erwähnt, dass die Ventilausnehmung 68 mittels eines Zapfenelements 102 verschlossen ist, Fig. 2. Von diesem steht mittig ein Führungsschaft 104 ab, welcher in ein entsprechendes Loch des Ventilglieds 92 eingreift. Zwischen dem Ventilglied 92 und dem Führungsschaft 104 wirkt ein ringförmiges Dichtelement, um einen Wasserfluss durch das Ventilglied 92 hindurch zu verhindern.

Der Vollständigkeit halber sei erwähnt, dass das Ventilglied 92, beziehungsweise dessen Kopf, umfangsseitig einen Dichtring 106 trägt, welcher mit dem Ventilsitz 78 zusammenwirkt.

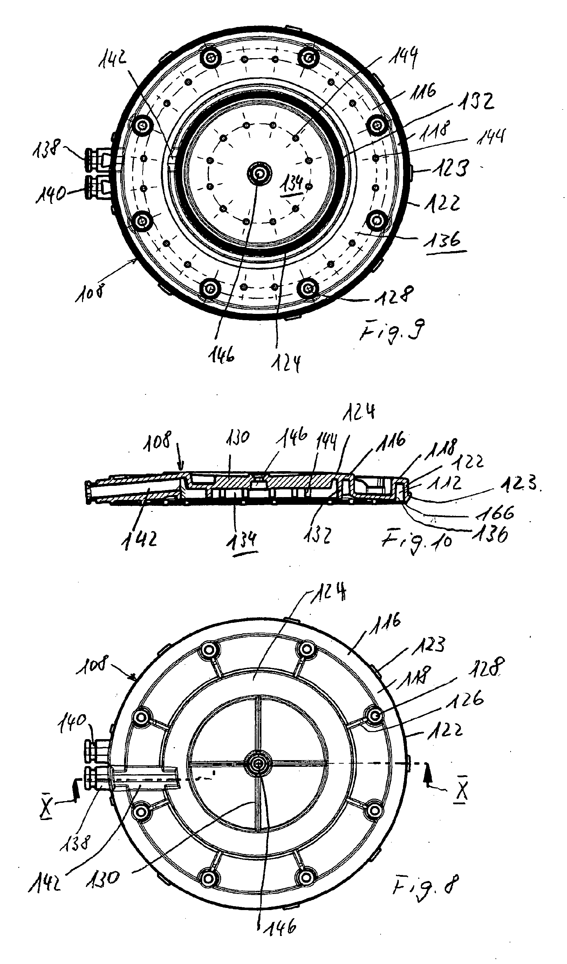

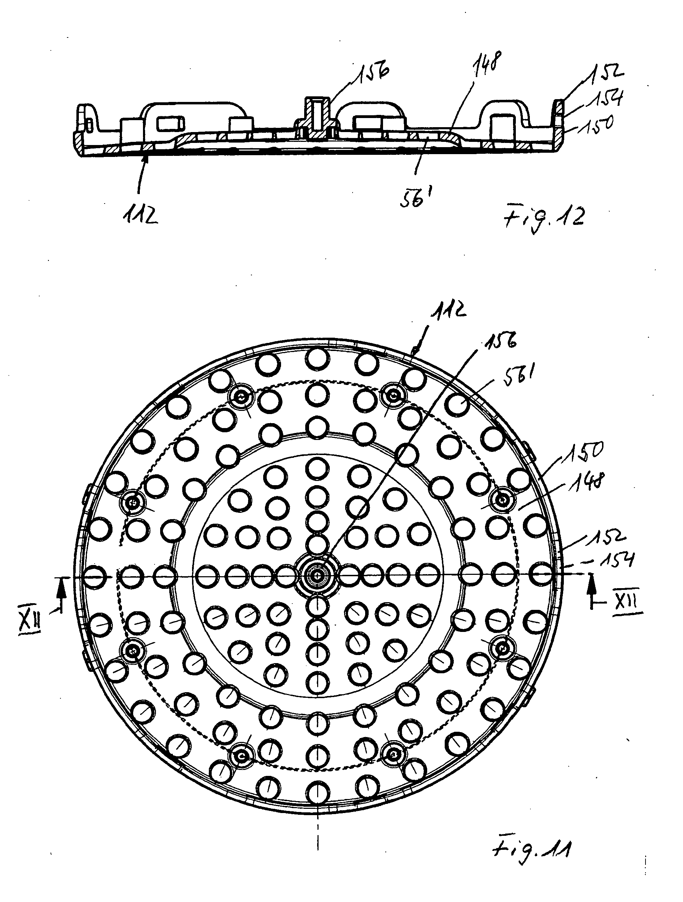

Im Kopfbereich 18 befindet sich im Innenraum 34 das Innengehäuse 44. Dieses ist aus einem einstückigen Deckelteil 108 - Fig. 8 bis 10 - und einem Auslassteil 110 gebildet, welches seinerseits aus einem Auslassschalenteil 112 - siehe Fig. 11 und 12 - und einem in dieses eingelegtem Einsatzteil 114 besteht, vergleiche Fig. 2.

Wie den Fig. 8 bis 10 entnehmbar ist, ist auch der - im Spritzgussverfahren hergestellte - kreisförmige Deckelteil 108 schalenartig ausgebildet. Die Schalenwand ist radial aussen zu einer umlaufenden, in Richtung gegen oben vorstehenden Sicke 118 geformt, welche in Richtung gegen unten, d.h. gegen das Innere des Innengehäuses 44 hin, eine Strömungsnut 112 bildet. Der radial aussen liegende Teil der Sicke 118 bildet gleichzeitig die Mantelwand 122 des Deckelteils 108 und an ihr sind in Umfangsrichtung verteilt, in radialer Richtung gegen aussen vorstehende Schnappnasen 123 angeformt.

In radialer Richtung bezüglich der Sicke 118 gegen Innen versetzt ist die Schalenwand 116 zu einer weiteren Sicke 124 geformt, welche ebenfalls in Richtung gegen oben vorsteht. Zwischen der Sicke 118 und der weiteren Sicke 124 verläuft die Schalenwand 116, ringförmig, in einer Ebene, wobei zwischen den beiden Sicken 118, 124 in Umfangsrichtung regelmässig verteilt Stützstege 126 verlaufen, welche bei der Sicke 118 verdickt sind und in axialer Richtung durchgehende Borungen 128 aufweisen, durch welche hindurch Schrauben geführt werden können, um den Deckelteil 108 mit dem Auslassschalenteil 112 zu verschrauben.

Radial innen bezüglich der weiteren Sicke 124 verläuft die Schalenwand 116 ebenfalls in einer Ebene, wobei kreuzartig angeformte weitere Stützstege 130 diesen Bereich der Schalenwand 116 verstärken. Auf der den Stützstegen 126 und den weiteren Stützstegen 130 gegenüberliegenden unteren, dem Innenraum des Innengehäuses 44 zugewandten Seite, steht von der weiteren Sicke 124 in Richtung gegen unten eine umlaufende Trennwand 132 ab. Der bezüglich dieser Trennwand 132 radial innen liegende Raum ist einer ersten Kammer 134 zugeordnet, während der bezüglich dieser Trennwand 132 radial aussen liegende Raum einer zweiten Kammer 136 zugeordnet ist.

Von der Mantelwand 122 stehen - radial nach aussen - nebeneinander und parallel zu einander ein erster Verbindungszapfen 138 und ein zweiter Verbindungszapfen 140 ab. Beide Verbindungszapfen 138 und 140 weisen eine umlaufende Aussennut auf, in welche je ein hier nicht gezeigter O-Ring montiert wird. Im montierten Zustand greift der erste Verbindungszapfen 138, mittels des betreffenden O-Rings dichtend, in die hülsenförmige erste Auslassöffnung 64 des Ventilgehäuses 42 ein. Entsprechend greift der zweite Verbindungszapfen 140, mit seinem O-Ring dichtend, in die ebenfalls hülsenförmige zweite Auslassöffnung 166 ein. Vom ersten Verbindungszapfen 138 führt ein, in Umfangsrichtung geschlossener, Verbindungskanal 142 in die erste Kammer 134. Der hülsenartige erste Verbindungszapfen 138 stellt somit, zusammen mit dem Verbindungskanal 142, eine Strömungsverbindung zwischen der Umschalteinrichtung 130 und der ersten Kammer 134 her. Entsprechend stellt der ebenfalls hülsenförmige zweite Verbindungszapfen 140 eine Strömungsverbindung zwischen der Umschalteinrichtung 30 und der radial aussen liegenden ringförmigen zweiten Kammer 136 her.

Der Vollständigkeit halber sei erwähnt, dass von der Mantelwand 122 Stützstifte 144 abstehen und sie in der Mitte einen Verschraubungsdurchlass 146 aufweist.

Wie den Fig. 11 und 12 zu entnehmen ist, ist ebenfalls der - im Spritzgussverfahren hergestellte - Auslassschalenteil 112 schalenartig ausgebildet. Sein Bodenabschnitt 148 ist entsprechend der Innenseite des Bodenteils 50 des ersten Gehäuseteils 112 im Kopfbereich 18 geformt und weist, mit den Wasserauslassdurchlässen 56 fluchtende, weitere Wasserauslassdurchlässe 56' auf. Vom radial aussenliegenden Rand des Bodenabschnitts 148 steht, in Richtung gegen oben, ein umlaufender Mantelabschnitt 150 ab. Dieser weist in Umfangsrichtung verteilte, in Richtung gegen oben vorstehende, Federzungenabschnitte 152 auf, in deren Rastöffnungen 154 im montierten Zustand die an der Mantelwand 122 angeformten Schnappnasen 123 in Eingriff gelangen; siehe dazu Fig. 2. Weiter steht vom Bodenabschnitt 148 zentrisch, in Richtung gegen oben, ein Befestigungszapfen 156 ab, welcher im montierten Zustand in den Verschraubungsdurchlass 146 des Deckelteils 108 in Eingriff gelangt. Mittels einer in den Befestigungszapfen 156 eingewindeten Schraube 158 wird der Befestigungszapfen 156 dichtend am Deckelteil 108 befestigt.

Andererseits steht der (diesseitig verschlossene) Befestigungszapfen in Richtung gegen aussen vor und ist dazu bestimmt, im montierten Zustand in den Zentrierzapfen 57 einzugreifen.

Wie dies der Fig. 2 entnehmbar ist, ist in den Auslassschalenteil 112, auf dessen Innenseite, teppichartig der Einsatzteil 114 eingelegt. Dieser weist einen flächigen Teppichabschnitt 160 auf, von welchem Wasserauslassfortsätze 162 abstehen. Jeder Wasserauslassfortsatz 162 durchgreift einen Wasserauslassdurchlass 56 des ersten Gehäuseteils 12 sowie einen weiteren Wasserauslassdurchlass 56' des Auslassschalenteils 112. Die Wasserauslassfortsätze 162 sind hülsenförmig ausgebildet und weisen an ihren freien Enden, welche über den ersten Gehäuseteil 12 vorstehen, die Wasserstrahlaustrittsöffnungen 22 auf.

Im montieren Zustand liegt die Trennwand 132 des Deckelteils 108 mit seinem freien Ende dichtend am flächigen Teppichabschnitt 160 an. Weiter weist der flächige Teppichabschnitt 160 eine, in Richtung gegen oben vorstehende, umlaufende Dichtzunge 164 auf, welche dichtend an der radial innen liegenden Wand der Trennwand 132 anliegt. Radial aussen wirkt der aus einem gummielastischen Material hergestellte Einsatzteil 114 mit seinem Teppichabschnitt 160 ebenfalls als Dichtung mit der umlaufenden Dichtkante 166 des Deckelteils 108 zusammen. Bei der in den Figuren gezeigten Ausführungsform ist das Aussengehäuse 10 selber nicht wasserführend. Wasserführend sind ausschliesslich in den Innenraum 34 eingebauten Bauteile, wie das Zuleitungsrohr 136, das Ventilgehäuse 42 der Umschalteinrichtung 30 und das Innengehäuse 44. Dies gibt dem Hersteller einen grossen Spielraum für die Ausgestaltung und die Materialwahl des Aussengehäuses 10. Zur sicheren Abdichtung des Innengehäuses 44 können der Deckelteil 108 und der Auslassschalenteil 112 zusätzlich zu den gezeigten Schnapp- und Schraubverbindungen auch noch miteinander verschweisst oder miteinander verklebt werden. Dasselbe trifft für die Verbindung zwischen dem Ventilgehäuse 42 und dem Innengehäuse 44 sowie zwischen dem Ventilgehäuse 42 und dem Zuleitungsrohrteil 36 zu.

Es ist auch denkbar, dass die Weichkomponente nicht die komplette Aussenseite des ersten Gehäuseteils 12 überdeckt, sondern nur einen Bereich der Aussenseite, welcher um den Durchlass 54 herum verläuft.

Weiter ist es auch denkbar, das Aussengehäuse 10 selber wasserführend auszubilden. Beide Gehäuseteile 12 und 14 können entsprechend ausgeformt werden.

## Patentansprüche

1. Handbrause mit einem einen Griffbereich (16) und einen Kopfbereich (18) definierenden, einen ersten Gehäuseteil (12) und einen zweiten Gehäuseteil (14) aufweisenden Aussengehäuse (10), einer in einem vom Aussengehäuse (10) begrenzten Innenraum (34) angeordneten Umschalteinrichtung (30), einem Wasserzuleitungsanschluss (20) und Wasserstrahlaustrittsöffnungen (22) im Bereich des Kopfbereichs (18), welche mit dem Wasserzuleitungsanschluss (20) verbunden sind, wobei mindestens der erste Gehäuseteil (12) im Zwei- oder Mehrkomponentenspritzgussverfahren hergestellt ist, einen formbeständigen Tragteil (46) aus einer Hartkomponente und eine an diesen angespritzte Weichkomponente (48) aufweist, und der Tragteil (46) bei der Umschalteinrichtung (30) einen vom Innenraum (34) zur von Innenraum (34) abgewandten Aussenseite (60) verlaufenden Durchlass (54) aufweist, welcher membranartig von der Weichkomponente (48) gegen die Umgebung hin verschlossen ist um die Betätigung der Umschalteinrichtung (30) von der Umgebung her, unter Verformung der Weichkomponente (48), zu ermöglichen.

2. Handbrause nach Anspruch 1, **dadurch gekennzeichnet, dass** der erste Gehäuseteil (12) sich über den Griffbereich (16) und den Kopfbereich (18) erstreckt und der Durchlass (54) sich im Griffbereich (16) befindet.

3. Handbrause nach Anspruch 1 oder 2, **dadurch gekennzeichnet, dass** der Tragteil (46) schalenartig, einen Bodenteil (50) und einen umfangsseitig von Bodenteil (50) abstehenden Mantelteil (52) bildend, ausgebildet ist und der zweite Gehäuseteil (14), einen Deckel (14') bildend, mit dem Mantelteil (52), vorzugsweise dichtend, verbunden ist.

4. Handbrause nach einem der Ansprüche 3, **dadurch gekennzeichnet, dass** der Bodenteil (50) im Kopfbereich (18) die Wasserstrahlaustrittsöffnungen (22) oder Wasserauslassdurchlässe (56) aufweist.

5. Handbrause nach einem der Ansprüche 1 bis 4, **dadurch gekennzeichnet, dass** die Weichkomponente (48) den Durchlass (54) vollständig und die Aussenseite (60) des Tragteils (46) mindestens um den Durchlass (54) herum überdeckt.

6. Handbrause nach einem der Ansprüche 1 bis 5, **dadurch gekennzeichnet, dass** die Weichkomponente (48) mindestens annähernd die gesamte, vorzugsweise die gesamte, Aussenseite (60) des Tragteils (46) überdeckt.

7. Handbrause nach einem der Ansprüche 1 bis 6, **dadurch gekennzeichnet, dass** die Umschalteinrichtung (30) ein Ventilgehäuse (42) mit einer mit dem Wasserzuleitungsanschluss (20) verbundenen Einlassöffnung (40) sowie zwei mit den Wasserstrahlaustrittsöffnungen (22) verbundene Auslassöffnungen (64, 66) und ein im Innern des Ventilgehäuses (42) angeordnetes, von der Umgebung her über die Weichkomponente (48) betätigbares Ventilglied (92) aufweist, wobei die Einlassöffnung (40) permanent mit einer ersten der Auslassöffnungen (64) und nur bei sich in Offenstellung befindlichem Ventilglied (92) mit einer zweiten der Auslassöffnungen (66) verbunden ist.

8. Handbrause nach Anspruch 7, **dadurch gekennzeichnet, dass** am Ventilgehäuse (42) ein von der Umgebung her über die Weichkomponente (48) betätigbarer, vorzugsweise als Betätigungswippe ausgebildeter Betätigungshebel (96) gelagert ist, welcher mit dem Ventilglied (92) zu dessen Umstellung verbunden ist.

9. Handbrause nach einem der Ansprüche 1 bis 8, **dadurch gekennzeichnet, dass** im Kopfbereich (18) im Innenraum (34) ein, ein Auslassteil (110) und ein Deckelteil (108) aufweisendes, mit der Umschalteinrichtung (30) verbundenes Innengehäuse (44) angeordnet ist und das Auslassteil (110) Wasserauslassfortsätze (162) mit den Wasserstrahlaustrittsöffnungen (22) aufweist, wobei gegebenenfalls die Wasserauslassfortsätze (162) die Wasserauslassdurchlässe (56) durchgreifen.

10. Handbrause nach Anspruch 9, **dadurch gekennzeichnet, dass** das Auslassteil (110) einen Auslassschalenteil (112) und einen im diesem angeordneten, aus einem gummielastischem Material gefertigten Einsatzteil (114) aufweist, welcher die Wasserauslassfortsätze (162) bildet.

11. Handbrause nach Anspruch 7 oder 8 und Anspruch 9 oder 10, **dadurch gekennzeichnet, dass** das Innengehäuse (44) eine erste Kammer (134) und eine zweite Kammer (136) bildet, wobei die erste Kammer (134) mit der ersten Auslassöffnung (64) und die zweite Kammer (136) mit der zweiten Auslassöffnung (66) verbunden ist.

12. Handbrause nach Anspruch 11, **dadurch gekennzeichnet, dass** die zweite Kammer (136) ringartig ausgebildet ist und die erste Kammer (134) umfangseitig umgreift.

## Claims

1. A hand shower comprising an outer housing (10) which defines a handle region (16) and a head region (18) and has a first housing part (12) and a second housing part (14), and further comprising a switching device (30) disposed in an interior (34) delimited by the outer housing (10), a water supply connection (20), and water jet discharge openings (22) in the region of the head region (18), which are connected to the water supply connection (20), wherein at least the first housing part (12) is produced by dual-component or multicomponent injection molding, has a dimensionally stable support (46), made of a hard component, and a thereon injected soft component (48), and the support (46), alongside the switching device (30), has a passage (54) which runs from the interior (34) to the outer side (60) facing away from the interior (34) and which is closed off from the surroundings in a membrane-like manner by the soft component (48) to allow the switching device (30) to be actuated from the surroundings with deformation of the soft component (48).

2. The hand shower as claimed in claim 1, wherein the first housing part (12) extends over the handle region (16) and the head region (18), and the passage (54) is located in the handle region (16).

3. The hand shower as claimed in claim 1 or 2, wherein the support (46) is of shell-like configuration, forming a base part (50) and a casing part (52) protruding peripherally from the base part (50), and the second housing part (14), forming a cover (14'), is connected, preferably sealingly, to the casing part (52).

4. The hand shower as claimed in claim 3, wherein the base part (50) has in the head region (18) the water jet discharge openings (22) or water outlet passages (56).

5. The hand shower as claimed in one of claims 1 to 4, wherein the soft component (48) covers the passage (54) fully and the outer side (60) of the support (46) at least around the passage (54).

6. The hand shower as claimed in one of claims 1 to 5, wherein the soft component (48) covers at least approximately the entire, preferably the entire outer side (60) of the support (46).

7. The hand shower as claimed in one of claims 1 to 6, wherein the switching device (30) has a valve housing (42), comprising an inlet opening (40) connected to the water supply connection (20), and further has two outlet openings (64, 66), connected to the water jet discharge openings (22), and a valve member (92), which is disposed inside the valve housing (42) and can be actuated from the surroundings via the soft component (48), the inlet opening (40) being permanently connected to a first of the outlet openings (64) and being connected to a second of the outlet openings (66) only when the valve member (92) is in the open setting.

8. The hand shower as claimed in claim 7, wherein on the valve housing (42) is mounted an actuating lever (96), which can be actuated from the surroundings via the soft component (48) and is preferably configured as an actuating rocker and which is connected to the valve member (92) for the switching thereof.

9. The hand shower as claimed in one of claims 1 to 8, wherein in the head region (18) an inner housing (44), which has an outlet part (110) and a cover part (108) and is connected to the switching device (30), is disposed in the interior (34), and the outlet part (110) has water outlet extensions (162) comprising the water jet discharge openings (22), the water outlet extensions (162), if need be, passing through the water outlet passages (56).

10. The hand shower as claimed in claim 9, wherein the outlet part (110) has an outlet shell part (112) and a therein disposed insert part (114) produced from an elastomeric material, which insert part forms the water outlet extensions (162).

11. The hand shower as claimed in claim 7 or 8 and 9 or 10, wherein the inner housing (44) forms a first chamber (134) and a second chamber (136), the first chamber (134) being connected to the first outlet opening (64) and the second chamber (136) being connected to the second outlet opening (66).

12. The hand shower as claimed in claim 11, wherein the second chamber (136) is of ring-like configuration and peripherally encompasses the first chamber (134).

## Revendications

1. Douche manuelle comportant un boîtier extérieur (10) définissant une zone de poignée (16) et une zone de tête (18) et comprenant une première partie de boîtier (12) et une deuxième partie de boîtier (14), un dispositif de commutation (30) disposé dans un espace intérieur (34) délimité par le boîtier extérieur (10), un raccord de conduite d'alimentation en eau (20) et des ouvertures de sortie de jets d'eau (22) dans la région de la zone de tête (18), lesquelles sont connectées au raccord de conduite d'alimentation en eau (20), au moins la première partie de boîtier (12) étant fabriquée à l'aide d'un procédé de moulage par injection à deux composants ou plus et comprenant une partie de support (46) résistant à la déformation constituée d'un composant dur et un composant mou (48) surmoulé sur celle-ci, et la partie de support (46) comprenant, près du dispositif de commutation (30), un passage (54) s'étendant à partir de l'espace intérieur (34) jusqu'au côté extérieur (60) opposé à l'espace intérieur (34), lequel passage est fermé par rapport à l'environnement par le composant mou (48), à la manière d'une membrane, afin de permettre l'actionnement du dispositif de commutation (30) depuis l'environnement, par déformation du composant mou (48).

2. Douche manuelle selon la revendication 1, **caractérisée en ce que** la première partie de boîtier (12) s'étend sur la zone de poignée (16) et la zone de tête (18), et le passage (54) se trouve dans la zone de poignée (16).

3. Douche manuelle selon la revendication 1 ou 2, **caractérisée en ce que** la partie de support (46) est réalisée en forme de coque, en formant une partie de fond (50) et une partie d'enveloppe (52) faisant saillie, du côté périphérique, à partir de la partie de fond (50), et la deuxième partie de boîtier (14) est reliée de préférence de manière étanche à la partie d'enveloppe (52), en formant un couvercle (14').

4. Douche manuelle selon la revendication 3, **caractérisée en ce que** la partie de fond (50) comprend, dans la zone de tête (18), les ouvertures de sortie de jets d'eau (22) ou des passages d'évacuation d'eau (56).

5. Douche manuelle selon l'une quelconque des revendications 1 à 4, **caractérisée en ce que** le composant mou (48) recouvre entièrement le passage (54) et le côté extérieur (60) de la partie de support (46) au moins autour du passage (54).

6. Douche manuelle selon l'une quelconque des revendications 1 à 5, **caractérisée en ce que** le composant mou (48) recouvre au moins approximativement la totalité, de préférence la totalité, du côté extérieur (60) de la partie de support (46).

7. Douche manuelle selon l'une quelconque des revendications 1 à 6, **caractérisée en ce que** le dispositif de commutation (30) comprend un boîtier de soupape (42) comportant une ouverture d'entrée (40) connectée au raccord de conduite d'alimentation en eau (20) ainsi que deux ouvertures d'évacuation (64, 66) connectées aux ouvertures de sortie de jets d'eau (22) et un organe de soupape (92) disposé à l'intérieur du boîtier de soupape (42) et pouvant être actionné depuis l'environnement par le biais du composant mou (48), l'ouverture d'entrée (40) étant connectée de manière permanente à une première ouverture d'évacuation parmi les ouvertures d'évacuation (64) et n'étant connectée à une deuxième ouverture d'évacuation parmi les ouvertures d'évacuation (66) que lorsque l'organe de soupape (92) se trouve dans la position ouverte.

8. Douche manuelle selon la revendication 7, **caractérisée en ce qu'**un levier d'actionnement (96) pouvant être actionné à partir de l'environnement par le biais du composant mou (48) et réalisé de préférence sous forme de bascule d'actionnement est monté sur le boîtier de soupape (42), lequel levier d'actionnement est connecté à l'organe de soupape (92) en vue de sa commutation.

9. Douche manuelle selon l'une quelconque des revendications 1 à 8, **caractérisée en ce que**, dans la zone de tête (18), un boîtier intérieur (44) comprenant une partie d'évacuation (110) et une partie de couvercle (108) et connecté au dispositif de commutation (30) est disposé dans l'espace intérieur (34), et la partie d'évacuation (110) comprend des saillies d'évacuation d'eau (162) pourvues des ouvertures de sortie de jets d'eau (22), les saillies d'évacuation d'eau (162) traversant éventuellement les passages d'évacuation d'eau (56).

10. Douche manuelle selon la revendication 9, **caractérisée en ce que** la partie d'évacuation (110) comprend une partie de coque d'évacuation (112) et une partie d'insert (114) disposée dans celle-ci et fabriquée à partir d'un matériau présentant l'élasticité du caoutchouc, laquelle partie d'insert forme les saillies d'évacuation d'eau (162).

11. Douche manuelle selon la revendication 7 ou 8 et la revendication 9 ou 10, **caractérisée en ce que** le boîtier intérieur (44) forme une première chambre (134) et une deuxième chambre (136), la première chambre (134) étant connectée à la première ouverture d'évacuation (64) et la deuxième chambre (136) étant connectée à la deuxième ouverture d'évacuation (66).

12. Douche manuelle selon la revendication 11, **caractérisée en ce que** la deuxième chambre (136) est réalisée sous forme annulaire et entoure la première chambre (134) du côté périphérique.
